# EUROPEAN PATENT APPLICATION

(11) **EP 4 773 341 A1**
(43) Date of publication of application: **08.07.2026**
(21) Application number: 25814548.1
(22) Date of filing: 28.04.2025
(51) Int. Cl.: H01M 10/54

(54) **SECONDARY BATTERY AND ELECTRONIC DEVICE**

(30) Priority: 31.05.2024 CN 202410707511
(71) Applicant: Ningde Amperex Technology Limited, Ningde City, Fujian Province 352100 (CN)
(72) Inventor: XU, Jinglei, Ningde City, Fujian Province 352100 (CN); LI, Junfei, Ningde City, Fujian Province 352100 (CN); LIU, Jianyu, Ningde City, Fujian Province 352100 (CN); LIU, Manman, Ningde City, Fujian Province 352100 (CN)
(74) Representative: Kraus & Lederer PartGmbB
(86) International application number: PCT/CN2025/091642
(87) International publication number: WO 2025/246770

(57) **Abstract**

This application provides a secondary battery and an electronic apparatus. A negative electrode material layer of the secondary battery includes a first negative electrode material layer and a second negative electrode material layer that are stacked, where the second negative electrode material layer is located between the first negative electrode material layer and a negative electrode current collector, a thickness of the first negative electrode material layer is H₁ µm, and a thickness of the second negative electrode material layer being H₂ µm, where 20≤H₁≤40, and 60≤H₂≤90; and Dᵥ50 of a first negative electrode active material in the first negative electrode material layer is greater than Dᵥ50 of a second negative electrode active material in the second negative electrode material layer. An electrolyte includes lithium difluorophosphate and a propionate compound, where the propionate compound includes propyl propionate; and based on a mass of the electrolyte, a mass percentage of the lithium difluorophosphate is W₁%, and a mass percentage of the propyl propionate is W₂%, where 0.1≤W₁≤1, 10≤W₂≤60, and 4≤W₁×H₁≤35. The secondary battery of this application has good kinetic performance and high-temperature float charging performance.

## Description

This application claims priority to Chinese Patent Application No. 202410707511.0, filed with the China National Intellectual Property Administration on May 31, 2024 and entitled "SECONDARY BATTERY AND ELECTRONIC APPARATUS", which is incorporated herein by reference in its entirety.

### TECHNICAL FIELD

This application relates to the field of electrochemical technology, and in particular, to a secondary battery and an electronic apparatus.

### BACKGROUND

Secondary batteries, such as lithium-ion batteries, are widely used in fields such as smartphones, wearable devices, consumer drones, and electric vehicles due to advantages such as high energy density, long cycle life, and no memory effect. With the widespread application of lithium-ion batteries in the above fields, the market has increasingly high requirements for the kinetic performance and high-temperature float charging performance of lithium-ion batteries.

However, in existing lithium-ion batteries, there are many side reactions between the positive electrode plate and the electrolyte solution and between the negative electrode plate and the electrolyte during cycling. The initial impedance is large, and the impedance growth during the cycling of lithium-ion batteries is also large, affecting the kinetic performance and high-temperature float charging performance of lithium-ion batteries.

### SUMMARY

This application is intended to provide a secondary battery and an electronic apparatus, so as to improve the kinetic performance and high-temperature float charging performance of the secondary battery. The specific technical solutions are as follows.

A first aspect of this application provides a secondary battery including a negative electrode plate and an electrolyte, where the negative electrode plate includes a negative electrode current collector and a negative electrode material layer disposed on at least one surface of the negative electrode current collector, the negative electrode material layer includes a first negative electrode material layer and a second negative electrode material layer that are stacked, the second negative electrode material layer is located between the first negative electrode material layer and the negative electrode current collector, a thickness of the first negative electrode material layer is H₁ µm, and a thickness of the second negative electrode material layer is H₂ µm, where 20≤H₁≤40, and 60≤H₂≤90; the first negative electrode material layer includes a first negative electrode active material, the second negative electrode material layer includes a second negative electrode active material, and Dᵥ50 of the first negative electrode active material is greater than Dᵥ50 of the second negative electrode active material; the electrolyte solution includes lithium difluorophosphate and a propionate compound, and the propionate compound includes propyl propionate; and based on a mass of the electrolyte solution, a mass percentage of the lithium difluorophosphate is W₁%, and a mass percentage of the propyl propionate is W₂%, where 0.1≤W1≤1, 10≤W₂≤60, and 4≤W₁×H₁≤35. This application, by designing the structure of the negative electrode plate and the composition of the electrolyte solution, and controlling the values of H₁, H₂, W₁, W₂, and W₁×H₁ within the above ranges, and the Dᵥ50 of the first negative electrode active material and the Dᵥ50 of the second negative electrode active material to satisfy the above relationship, can improve the wettability of the electrolyte solution to the negative electrode plate, reduce side reactions between the positive electrode plate and the electrolyte solution and between the negative electrode plate and the electrolyte solution during cycling, and improve the solubility of lithium salt in the electrolyte solution and the conductivity of the electrolyte solution. This facilitates the transmission of lithium ions in the negative electrode plate and the electrolyte solution, reducing the initial impedance of the secondary battery and the impedance growth during cycling, thereby improving the kinetic performance and high-temperature float charging performance of the secondary battery.

In some embodiments of this application, 2≤H₂/H₁≤4.5. Controlling the value of H₂/H₁ within the above range can further improve the wettability of the electrolyte solution to the negative electrode plate, and can also reduce the side reactions between the negative electrode plate and the electrolyte solution during cycling. This is conducive to reducing the initial impedance of the secondary battery and the impedance growth during cycling, thereby improving the kinetic performance and high-temperature float charging performance of the secondary battery.

In some embodiments of this application, 0.005≤W₁/H₁≤0.05. Controlling the value of W₁/H₁ within the above range facilitates the synergistic effect between the negative electrode plate and the electrolyte solution, further improving the kinetic performance of the first negative electrode material layer. This is conducive to further reducing the initial impedance of the secondary battery and the impedance growth during cycling, thereby further improving the kinetic performance and high-temperature float charging performance of the secondary battery.

In some embodiments of this application, 250≤W₂×H₁≤2400. Controlling the value of W₂×H₁ within the above range facilitates the synergistic effect between the negative electrode plate and the electrolyte solution, improving the kinetic performance of the first negative electrode material layer. This is conducive to further reducing the initial impedance of the secondary battery and the impedance growth during cycling, thereby further improving the kinetic performance and high-temperature float charging performance of the secondary battery.

In some embodiments of this application, the electrolyte solution includes a polynitrile compound, where based on the mass of the electrolyte solution, a mass percentage of the polynitrile compound is W₃%, 0.1≤W₃≤5, and the polynitrile compound includes at least one of succinonitrile, glutaronitrile, adiponitrile, pimelonitrile, suberonitrile, methylglutaronitrile, 1,3,5-pentanetricarbonitrile, 1,2,3-propanetricarbonitrile, 1,3,6-hexanetricarbonitrile, or 1,2,3-tris(2-cyanoethoxy)propane. On the basis that the electrolyte solution includes lithium difluorophosphate and propyl propionate, further introducing the above polynitrile compound and controlling its mass percentage W₃% within the above range can improve the stability of both the positive electrode plate and the negative electrode plate, as well as improve the electrochemical stability and thermal stability of the electrolyte solution. This not only reduces the initial impedance of the secondary battery and the impedance growth during cycling and improves the kinetic performance of the secondary battery, but also improves the high-temperature float charging performance of the secondary battery.

In some embodiments of this application, 50≤W₃×H₁≤200. Controlling the value of W₃×H₁ within the above range not only reduces the initial impedance of the secondary battery and the impedance growth during cycling and improves the kinetic performance of the secondary battery, but also further improves the high-temperature float charging performance of the secondary battery.

In some embodiments of this application, based on the mass of the electrolyte solution, a mass percentage of the propionate compound is W₄%, where 10≤W₄≤65, and 0.154≤W₂/W₄≤1. On the basis that the electrolyte solution includes lithium difluorophosphate and propyl propionate, controlling the mass percentage W₄% of the propionate compound and the value of W₂/W₄ within the above ranges is conducive to further reducing the initial impedance of the secondary battery and the impedance growth during cycling, thereby improving the kinetic performance and high-temperature float charging performance of the secondary battery.

In some embodiments of this application, the propionate compound further includes at least one of methyl propionate, ethyl propionate, butyl acrylate, or butyl propionate. On the basis that the electrolyte solution includes lithium difluorophosphate and propyl propionate, the electrolyte solution further includes the propionate compound, which is conducive to further reducing the initial impedance of the secondary battery and the impedance growth during cycling, thereby further improving the kinetic performance and high-temperature float charging performance of the secondary battery.

In some embodiments of this application, Dᵥ50 of the first negative electrode active material is 12 µm to 14.9 µm, and Dᵥ90 of the first negative electrode active material is 20.5 µm to 25.9 µm. Controlling the Dᵥ50 and Dᵥ90 of the first negative electrode active material within the above ranges can improve the wettability of the electrolyte solution to the negative electrode plate, reduce the side reactions between the negative electrode plate and the electrolyte solution during cycling, and improve the stability of the negative electrode plate. This is conducive to further reducing the initial impedance of the secondary battery and the impedance growth during cycling, thereby improving the kinetic performance of the secondary battery, as well as improving the high-temperature float charging performance of the secondary battery.

In some embodiments of this application, Dᵥ50 of the second negative electrode active material is 10 µm to 11.5 µm, and Dᵥ90 of the second negative electrode active material is 19.4 µm to 24.8 µm. Controlling the Dᵥ50 and Dᵥ90 of the second negative electrode active material within the above ranges can further improve the wettability of the electrolyte solution to the negative electrode plate, and reduce the side reactions between the negative electrode plate and the electrolyte solution during cycling. This is conducive to reducing the initial impedance of the secondary battery and the impedance growth during cycling, thereby improving the kinetic performance of the secondary battery, as well as improving the high-temperature float charging performance of the secondary battery.

In some embodiments of this application, the first negative electrode active material and the second negative electrode active material each independently include at least one of natural graphite, artificial graphite, soft carbon, hard carbon, meso-carbon microbead, silicon-carbon compound, silicon oxide compound, or lithium titanate. The negative electrode plate includes the first negative electrode material layer and the second negative electrode material layer, with the values of H₁ and H₂ and the relationship between the Dᵥ50 of the first negative electrode active material and the Dᵥ50 of the second negative electrode active material controlled within the ranges of this application, and the electrolyte solution includes lithium difluorophosphate and propyl propionate, with the values of W₁, W₂, and W₁×H₁ controlled within the ranges of this application. On such basis, use of the foregoing first negative electrode active material and second negative electrode active material allows the secondary battery to have good kinetic performance and high-temperature float charging performance.

A second aspect of this application provides an electronic apparatus including the secondary battery according to the first aspect of this application. The secondary battery provided in this application has good kinetic performance and high-temperature float charging performance, and therefore the electronic apparatus provided in this application has a relatively long service life and good performance.

### Beneficial effects of this application:

This application provides a secondary battery and an electronic apparatus. The secondary battery includes a negative electrode plate and an electrolyte solution, where the negative electrode plate includes a negative electrode current collector and a negative electrode material layer disposed on at least one surface of the negative electrode current collector, the negative electrode material layer includes a first negative electrode material layer and a second negative electrode material layer that are stacked, the second negative electrode material layer is located between the first negative electrode material layer and the negative electrode current collector, a thickness of the first negative electrode material layer is H₁ µm, and a thickness of the second negative electrode material layer is H₂ µm, where 20≤H₁≤40, and 60≤H₂≤90; the first negative electrode material layer includes a first negative electrode active material, the second negative electrode material layer includes a second negative electrode active material, and Dᵥ50 of the first negative electrode active material is greater than Dᵥ50 of the second negative electrode active material; the electrolyte solution includes lithium difluorophosphate and a propionate compound, and the propionate compound includes propyl propionate; and based on a mass of the electrolyte solution, a mass percentage of the lithium difluorophosphate is W₁%, and a mass percentage of the propyl propionate is W₂%, where 0.1≤W₁≤1, 10≤W₂≤60, and 4≤W₁×H₁≤35. This application, by designing the structure of the negative electrode plate and the composition of the electrolyte solution, and controlling the values of H₁, H₂, W₁, W₂, and W₁×H₁ within the above ranges, and the Dᵥ50 of the first negative electrode active material and the Dᵥ50 of the second negative electrode active material to satisfy the above relationship, can improve the wettability of the electrolyte solution to the negative electrode plate, reduce side reactions between the positive electrode plate and the electrolyte solution and between the negative electrode plate and the electrolyte solution during cycling, and improve the solubility of lithium salt in the electrolyte solution and the conductivity of the electrolyte solution. This facilitates the transmission of lithium ions in the negative electrode plate and the electrolyte solution, reducing the initial impedance of the secondary battery and the impedance growth during cycling, thereby improving the kinetic performance and high-temperature float charging performance of the secondary battery.

Certainly, implementing any product or method of this application does not necessarily need to achieve all the above advantages at the same time.

### BRIEF DESCRIPTION OF DRAWINGS

To describe the technical solutions in the embodiments of this application or in the prior art more clearly, the following briefly describes the accompanying drawings for describing the embodiments or the prior art. Apparently, the accompanying drawings in the following description show merely some embodiments of this application, and persons of ordinary skill in the art may still derive other embodiments from these accompanying drawings.
FIG. 1 is a schematic structural diagram of a negative electrode plate according to an embodiment of this application along its own thickness direction;
FIG. 2 is a graph showing impedance changes of lithium-ion batteries of Example 1-1 and Comparative Example 1 of this application with the cycle count; and
FIG. 3 is a graph showing thickness change rate changes of lithium-ion batteries of Example 1-1 and Comparative Example 1 of this application with charging time.

Reference signs: negative electrode plate 10, negative electrode current collector 11, first negative electrode material layer 12, and second negative electrode material layer 13.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons skilled in the art based on this application shall fall within the protection scope of this application.

It should be noted that in the following content, lithium-ion batteries are used as examples of secondary batteries to explain this application, but the secondary batteries of this application are not limited to lithium-ion batteries. The specific technical solutions are as follows.

A first aspect of this application provides a secondary battery including a negative electrode plate and an electrolyte solution. The negative electrode plate includes a negative electrode current collector and a negative electrode material layer disposed on at least one surface of the negative electrode current collector, the negative electrode material layer including a first negative electrode material layer and a second negative electrode material layer that are stacked, where the second negative electrode material layer is located between the first negative electrode material layer and the negative electrode current collector, a thickness of the first negative electrode material layer is H₁ µm, and a thickness of the second negative electrode material layer is H₂ µm, where 20≤H₁≤40, and 60≤H₂≤90. For example, a value of H₁ may be 20, 23, 25, 28, 30, 32, 36, 38, 40, or in a range of any two of these values, and a value of H₂ may be 60, 63, 65, 68, 70, 72, 76, 78, 80, 83, 85, 87, 90, or in a range of any two of these values. The first negative electrode material layer includes a first negative electrode active material, the second negative electrode material layer includes a second negative electrode active material, and Dᵥ50 of the first negative electrode active material is greater than Dᵥ50 of the second negative electrode active material. The electrolyte solution includes lithium difluorophosphate (LiPO₂F₂) and a propionate compound, where the propionate compound includes propyl propionate; and based on a mass of the electrolyte solution, a mass percentage of the lithium difluorophosphate is W₁%, and a mass percentage of the propyl propionate is W₂%, where 0.1≤W₁≤1, 10≤W₂≤60, and 4≤W₁×H₁≤35. For example, a value of W₁ may be 0.1, 0.2, 0.3, 0.4, 0.5, 0.6, 0.7, 0.8, 0.9, 1, or in a range of any two of these values, a value of W₂ may be 10, 15, 20, 24, 30, 35, 40, 46, 50, 54, 60, or in a range of any two of these values, and a value of W₁×H₁ may be 4, 8, 10, 12, 15, 17, 20, 23, 25, 28, 30, 35, or in a range of any two of these values.

The negative electrode plate includes a first negative electrode material layer and a second negative electrode material layer, and the values of H₁ and H₂ are controlled within the above ranges, which can reduce the consumption of the electrolyte solution, ensuring good wettability of the electrolyte solution to the first negative electrode material layer and the second negative electrode material layer. This improves the wettability of the electrolyte solution to the negative electrode plate, facilitating the transmission of lithium ions in the negative electrode plate. This also reduces the side reactions between the negative electrode plate and the electrolyte solution during cycling, reducing the initial impedance of the secondary battery and the impedance growth during cycling, thereby improving the kinetic performance and high-temperature float charging performance of the secondary battery. The first negative electrode material layer includes a first negative electrode active material, the second negative electrode material layer includes a second negative electrode active material, and Dᵥ50 of the first negative electrode active material is greater than Dᵥ50 of the second negative electrode active material. The specific surface area of the first negative electrode active material is smaller, which can reduce the side reactions between the negative electrode plate and the electrolyte solution, reducing the initial impedance of the secondary battery. The particle size of the second negative electrode active material is smaller, which can improve the wettability of the electrolyte solution to the negative electrode plate, increase the diffusion paths of lithium ions, and reduce the impedance growth during cycling of the secondary battery, thereby improving the kinetic performance and high-temperature float charging performance of the secondary battery. The electrolyte solution includes lithium difluorophosphate and propyl propionate, and the values of W₁ and W₂ are controlled within the above ranges, which allows lithium difluorophosphate to participate in the film-forming processes at both the positive electrode interface and the negative electrode interface, resulting in the formation of denser and more stable cathode electrolyte solution interphase (CEI) films and solid electrolyte solution interphase (SEI) films. This reduces side reactions between the positive electrode plate and the electrolyte solution and between the negative electrode plate and the electrolyte solution. Propyl propionate has a high dielectric constant and better solvent kinetic performance, which can improve the solubility of lithium salt in the electrolyte solution and the conductivity of the electrolyte solution, facilitating the transmission of lithium ions in the electrolyte solution. This is conducive to reducing the initial impedance of the secondary battery and the impedance growth during cycling, thereby improving the kinetic performance and high-temperature float charging performance of the secondary battery. Controlling the value of W₁×H₁ within the above range facilitates the synergistic effect between the negative electrode plate and the electrolyte solution, and allows the formation of denser and more stable SEI films at the negative electrode interface, further reducing side reactions between the negative electrode plate and the electrolyte solution. This also improves the wettability of the electrolyte solution to the negative electrode plate, facilitates the transmission of lithium ions in the negative electrode plate, and enhances the kinetic performance of the first negative electrode material layer, thereby further reducing the initial impedance of the secondary battery and the impedance growth during cycling, and further improving the kinetic performance and high-temperature float charging performance of the secondary battery.

When the value of H₁ is too small, for example, less than 20, it is difficult to reduce the impedance growth of the secondary battery during cycling, affecting the kinetic performance and high-temperature float charging performance of the secondary battery. When the value of H₁ is too large, for example, greater than 40, the kinetic performance of the first negative electrode material layer becomes excessively poor, the wettability of the electrolyte solution to the second negative electrode material layer is excessively poor, and the transmission of lithium ions in the negative electrode plate is excessively slow. All leads to excessive initial impedance and impedance growth during cycling of the secondary battery, affecting the kinetic performance and high-temperature float charging performance of the secondary battery. When the value of H₂ is too small, for example, less than 60, it is difficult to reduce the initial impedance of the secondary battery, affecting the kinetic performance and high-temperature float charging performance of the secondary battery. When the value of H₂ is too large, for example, greater than 90, the wettability of the electrolyte solution to the second negative electrode material layer becomes excessively poor, and side reactions between the negative electrode plate and the electrolyte solution increase during cycling. All leads to excessive initial impedance and impedance growth during cycling of the secondary battery, affecting the kinetic performance and high-temperature float charging performance of the secondary battery.

When the Dᵥ50 of the first negative electrode active material is less than the Dᵥ50 of the second negative electrode active material, the wettability of the electrolyte solution to the negative electrode plate is excessively poor, and the transmission of lithium ions in the negative electrode plate is excessively slow, along with excessive side reactions between the negative electrode plate and the electrolyte solution. All leads to excessive initial impedance and impedance growth during cycling of the secondary battery, affecting the kinetic performance and high-temperature float charging performance of the secondary battery.

When the value of W₁ is too small, for example, less than 0.1, the mass percentage of lithium difluorophosphate is too low, making it difficult to form dense and stable CEI films and SEI films at the positive electrode interface and negative electrode interface. As a result, excessive side reactions take place between the positive electrode plate and the electrolyte solution and between the negative electrode plate and the electrolyte solution. This leads to excessive initial impedance and impedance growth during cycling of the secondary battery, affecting the kinetic performance and high-temperature float charging performance of the secondary battery. When the value of W₁ is too large, for example, greater than 1, the mass percentage of lithium difluorophosphate is too high, and its solubility in the electrolyte solution is excessively poor, making it difficult to dissolve fully. As a result, the electrolyte solution becomes turbid and unsuitable for use in the secondary battery. When the value of W₂ is too small, for example, less than 10, the mass percentage of propyl propionate is too low, resulting in excessively low solubility of lithium salt in the electrolyte solution. This affects the conductivity of the electrolyte solution, and is not conducive to the transmission of lithium ions in the electrolyte solution, leading to excessive initial impedance and impedance growth during cycling of the secondary battery, affecting the kinetic performance and high-temperature float charging performance of the secondary battery. When the value of W₂ is too large, for example, greater than 60, the mass percentage of propyl propionate is too high, which is not conducive to the dissolution of lithium ions, and affects the transmission of lithium ions in the electrolyte solution, affecting the kinetic performance and high-temperature float charging performance of the secondary battery.

When the value of W₁×H₁ is too small, for example, less than 4, it is not conducive to exerting the synergistic effect between the negative electrode plate and the electrolyte solution, making it difficult to form dense and stable SEI films at the negative electrode interface, resulting in excessive side reactions between the negative electrode plate and the electrolyte solution. This leads to excessive initial impedance and impedance growth during cycling of the secondary battery, affecting the kinetic performance and high-temperature float charging performance of the secondary battery. When the value of W₁×H₁ is too large, for example, greater than 35, it is not conducive to the synergistic effect between the negative electrode plate and the electrolyte solution, the kinetic performance of the first negative electrode material layer becomes excessively poor, the wettability of the electrolyte solution to the second negative electrode material layer is excessively poor, the transmission of lithium ions in the negative electrode plate is excessively slow, and the solubility of lithium difluorophosphate in the electrolyte solution is excessively poor. All leads to excessive initial impedance and impedance growth during cycling of the secondary battery, affecting the kinetic performance and high-temperature float charging performance of the secondary battery.

Therefore, when the negative electrode plate includes a first negative electrode material layer and a second negative electrode material layer, with the values of Hi and H₂ controlled within the above ranges, and the Dᵥ50 of the first negative electrode active material and the Dᵥ50 of the second negative electrode active material controlled to satisfy the above relationship, and the electrolyte solution includes lithium difluorophosphate and propyl propionate, with the values of W₁, W₂, and W₁×H₁ controlled within the above ranges, the initial impedance of the secondary battery and the impedance growth during cycling can be reduced, improving the kinetic performance and high-temperature float charging performance of the secondary battery.

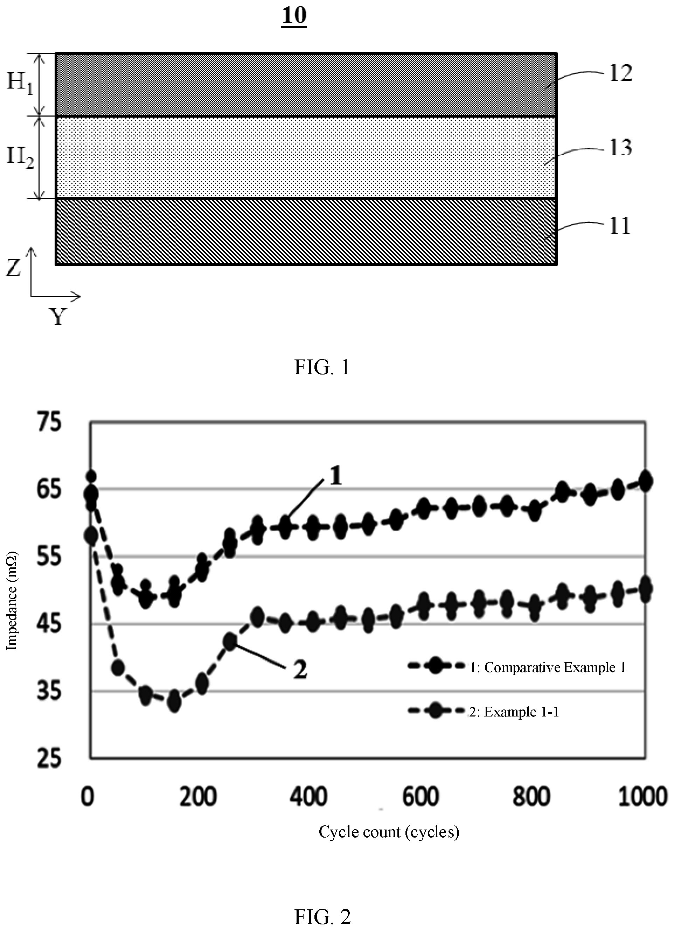

For ease of understanding, in this application, a length direction of the negative electrode plate is defined as Y, and a thickness direction thereof is defined as Z. The negative electrode plate typically has long sides and short sides, and the length direction refers to an extension direction of the long side of the negative electrode plate. It should be understood that the above definition of direction is for the convenience of describing the purpose of this application. As shown in FIG. 1, the negative electrode plate 10 includes a negative electrode current collector 11, and a second negative electrode material layer 13 and a first negative electrode material layer 12 sequentially disposed on one surface of the negative electrode current collector 11. H₁ is a thickness of the first negative electrode material layer, and H₂ is a thickness of the second negative electrode material layer. In this application, the negative electrode material layer may be disposed on one surface of the negative electrode current collector along its thickness direction, or disposed on two surfaces of the negative electrode current collector along its thickness direction. It should be noted that the "surface" herein may refer to the entire region of the surface of the negative electrode current collector or a partial region of the surface of the negative electrode current collector, which is not particularly limited in this application, as long as the purpose of this application can be achieved.

In some embodiments of this application, 2≤H₂/H₁≤4.5. For example, a value of H₂/H₁ may be 2, 2.3, 2.5, 2.8, 3, 3.2, 3.6, 3.8, 4, 4.2, 4.5, or in a range of any two of these values. With the value of H₂/H₁ controlled within the above range, the electrolyte solution can have good wettability to the first negative electrode material layer and the second negative electrode material layer, improving the wettability of the electrolyte solution to the negative electrode plate, facilitating the transmission of lithium ions in the negative electrode plate. This can also reduce side reactions between the negative electrode plate and the electrolyte solution during cycling, reducing the initial impedance of the secondary battery and the impedance growth during cycling, thereby improving the kinetic performance and high-temperature float charging performance of the secondary battery.

In some embodiments of this application, 0.005≤W₁/H₁≤0.05. For example, a value of W₁/H₁ may be 0.005, 0.01, 0.015, 0.02, 0.024, 0.03, 0.036, 0.04, 0.045, 0.05, or in a range of any two of these values. Controlling the value of W₁/H₁ within the above range facilitates the synergistic effect between the negative electrode plate and the electrolyte solution, and allows the formation of denser and more stable SEI films at the negative electrode interface, further reducing side reactions between the negative electrode interface and the electrolyte solution. This also further improves the wettability of the electrolyte solution to the negative electrode plate, facilitates the transmission of lithium ions in the negative electrode plate, and further improves the kinetic performance of the first negative electrode material layer, thereby further reducing the initial impedance of the secondary battery and the impedance growth during cycling, and further improving the kinetic performance and high-temperature float charging performance of the secondary battery.

In some embodiments of this application, 250≤W₂×H₁≤2400. For example, a value of W₂×H₁ may be 250, 500, 800, 1000, 1200, 1500, 1800, 2000, 2400, or in a range of any two of these values. Controlling the value of W₂×H₁ within the above range facilitates the synergistic effect between the negative electrode plate and the electrolyte solution, improves the solubility of lithium salt in the electrolyte solution and the conductivity of the electrolyte solution, and improves the wettability of the electrolyte solution to the negative electrode plate. This facilitates the transmission of lithium ions in the electrolyte solution and the negative electrode plate, and improves the kinetic performance of the first negative electrode material layer, thereby further reducing the initial impedance of the secondary battery and the impedance growth during cycling, and further improving the kinetic performance and high-temperature float charging performance of the secondary battery.

In some embodiments of this application, the electrolyte solution includes a polynitrile compound, where based on a mass of the electrolyte solution, a mass percentage of the polynitrile compound is W₃%, where 0.1≤W₃≤5. The polynitrile compound includes at least one of succinonitrile, glutaronitrile, adiponitrile, pimelonitrile, suberonitrile, methylglutaronitrile, 1,3,5-pentanetricarbonitrile, 1,2,3-propanetricarbonitrile, 1,3,6-hexanetricarbonitrile, or 1,2,3-tris(2-cyanoethoxy)propane. For example, a value of W₃ may be 0.1, 0.6, 1, 1.5, 2, 2.4, 3, 3.6, 4, 4.5, 5, or in a range of any two of these values. On the basis that the electrolyte solution includes lithium difluorophosphate and propyl propionate, the polynitrile compound is further introduced, and its mass percentage W₃% is controlled within the above range, so that the polynitrile compound, due to the strong coordination ability, can complex with high-valence metal ions (for example, cobalt ions) at the positive electrode interface, reducing phase change reactions of the positive electrode active material caused by metal ion dissolution, and facilitating the formation of more stable CEI films. At the negative electrode interface, reduction reactions take place to form stable SEI films, improving the stability of both the positive electrode plate and the negative electrode plate. Moreover, the carbon-nitrogen triple bond in the polynitrile compound has high bond energy, is not prone to oxidization, and can reduce oxidative decomposition and gas production of the electrolyte solution, improving the electrochemical stability and thermal stability of the electrolyte solution. This not only reduces the initial impedance of the secondary battery and the impedance growth during cycling and improves the kinetic performance of the secondary battery, but also improves the high-temperature float charging performance of the secondary battery. In this application, high temperature refers to a temperature greater than or equal to 40°C.

In some embodiments of this application, 50≤W₃×H₁≤200. For example, a value of W₃×H₁ may be 50, 80, 100, 120, 150, 180, 200, or in a range of any two of these values. Controlling the value of W₃×H₁ within the above range facilitates the synergistic effect between the negative electrode plate and the electrolyte solution, and allows for reduction reactions at the negative electrode interface to form stable SEI films, improving the stability of the negative electrode plate. This also improves the wettability of the electrolyte solution to the negative electrode plate, facilitates the transmission of lithium ions in the negative electrode plate, improving the kinetic performance of the first negative electrode material layer, reduces oxidative decomposition and gas production of the electrolyte solution, and improves the electrochemical stability and thermal stability of the electrolyte solution. This not only reduces the initial impedance of the secondary battery and the impedance growth during cycling and improves the kinetic performance of the secondary battery, but also further improves the high-temperature float charging performance of the secondary battery.

In some embodiments of this application, based on the mass of the electrolyte solution, a mass percentage of the propionate compound is W₄%, where 10≤W₄≤65, and 0.154≤W₂/W₄≤1. For example, a value of W₄ may be 10, 15, 20, 24, 30, 35, 40, 46, 50, 54, 60, 65, or in a range of any two of these values, and a value of W₂/W₄ may be 0.154, 0.3, 0.35, 0.4, 0.5, 0.62, 0.7, 0.85, 0.9, 1, or in a range of any two of these values. On the basis that the electrolyte solution includes lithium difluorophosphate and propyl propionate, controlling the mass percentage W₄% of the propionate compound and the value of W₂/W₄ within the above ranges can improve the solubility of lithium salt in the electrolyte solution and the conductivity of the electrolyte solution, facilitating the transmission of lithium ions in the electrolyte solution. This is conducive to reducing the initial impedance of the secondary battery and the impedance growth during cycling, thereby improving the kinetic performance and high-temperature float charging performance of the secondary battery.

In some embodiments of this application, the propionate compound further includes at least one of methyl propionate, ethyl propionate, butyl acrylate, or butyl propionate. On the basis that the electrolyte solution includes lithium difluorophosphate and propyl propionate, the electrolyte solution further including the propionate compound can improve the solubility of lithium salt in the electrolyte solution and the conductivity of the electrolyte solution, facilitating the transmission of lithium ions in the electrolyte solution. This is conducive to further reducing the initial impedance of the secondary battery and the impedance growth during cycling, thereby further improving the kinetic performance and high-temperature float charging performance of the secondary battery.

In this application, the electrolyte solution further includes another organic solvent. This application imposes no particular limitation on a type of the another organic solvent, as long as the purpose of this application can be achieved. For example, the another organic solvent may include, but is not limited to, at least one of carbonate compound, carboxylate compound, ether compound, or other organic solvents. The carbonate compound may include, but is not limited to, at least one of chain carbonate compound, cyclic carbonate compound, or fluorinated carbonate compound. The chain carbonate compound may include, but is not limited to, at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate compound may include, but is not limited to, at least one of ethylene carbonate (EC), propylene carbonate (PC), butylene carbonate (BC), or vinyl ethylene carbonate (VEC). The fluorinated carbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethyl ethylene carbonate. The carboxylate compound may include, but is not limited to, at least one of methyl formate, methyl acetate, ethyl acetate, n-propyl acetate, tert-butyl acetate, γ-butyrolactone, caprolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, trimethyl phosphate, triethyl phosphate, or trioctyl phosphate. Based on the mass of the electrolyte solution, a mass percentage of the another organic solvent is 14% to 81%. For example, the mass percentage of the another organic solvent may be 14%, 19%, 24%, 30%, 40%, 50%, 62%, 70%, 78%, 81%, or in a range of any two of these values.

In this application, the electrolyte solution further includes a lithium salt. This application imposes no particular limitation on the lithium salt, as long as it can achieve the purpose of this application. For example, the lithium salt may include, but is not limited to, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoro(oxalato)borate. Based on the mass of the electrolyte solution, a mass percentage of the lithium salt is 8% to 15%.

In some embodiments, the electrolyte solution may include a lithium salt, lithium difluorophosphate, propyl propionate, and another organic solvent. The mass percentages of the lithium salt, lithium difluorophosphate, and propyl propionate are as described above, and the mass percentage of the another organic solvent is 24% to 81%. The secondary battery including such electrolyte solution has good kinetic performance and high-temperature float charging performance.

In some embodiments, the electrolyte solution may include a lithium salt, lithium difluorophosphate, propyl propionate, a polynitrile compound, and another organic solvent. The mass percentages of the lithium salt, lithium difluorophosphate, propyl propionate, and polynitrile compound are as described above, and the mass percentage of the another organic solvent is 19% to 81%. The secondary battery including such electrolyte solution has good kinetic performance and high-temperature float charging performance.

In some embodiments, the electrolyte solution may include a lithium salt, lithium difluorophosphate, a propionate compound, and another organic solvent. The propionate compound includes propyl propionate and at least one of methyl propionate, ethyl propionate, butyl acrylate, or butyl propionate. The mass percentages of the lithium salt, lithium difluorophosphate, and propionate compound are as described above, and the mass percentage of the another organic solvent is 19% to 81%. The secondary battery including such electrolyte solution has good kinetic performance and high-temperature float charging performance.

In some embodiments, the electrolyte solution may include a lithium salt, lithium difluorophosphate, a propionate compound, a polynitrile compound, and another organic solvent. The propionate compound includes propyl propionate and at least one of methyl propionate, ethyl propionate, butyl acrylate, or butyl propionate. The mass percentages of the lithium salt, lithium difluorophosphate, propionate compound, and polynitrile compound are as described above, and the mass percentage of the another organic solvent is 14% to 81%. The secondary battery including such electrolyte solution has better kinetic performance and high-temperature float charging performance.

In some embodiments of this application, Dᵥ50 of the first negative electrode active material is 12 µm to 14.9 µm, and Dᵥ90 of the first negative electrode active material is 20.5 µm to 25.9 µm. For example, the Dᵥ50 of the first negative electrode active material may be 12 µm, 12.3 µm, 12.7 µm, 13 µm, 13.4 µm, 13.7 µm, 14 µm, 14.5 µm, 14.9 µm, or in a range of any two of these values, and the Dᵥ90 of the first negative electrode active material may be 20.5 µm, 21 µm, 21.6 µm, 22 µm, 22.4 µm, 23 µm, 23.5 µm, 24 µm, 24.6 µm, 25 µm, 25.9 µm, or in a range of any two of these values. Controlling the Dᵥ50 and Dᵥ90 of the first negative electrode active material within the above ranges can reduce the consumption of the electrolyte solution by the negative electrode plate, and improve the wettability of the electrolyte solution to the negative electrode plate, facilitating the transmission of lithium ions in the negative electrode plate. This can also reduce side reactions between the negative electrode plate and the electrolyte solution during cycling, and improve the stability of the negative electrode plate, reducing the initial impedance of the secondary battery and the impedance growth during cycling, thereby improving the kinetic performance of the secondary battery, as well as improving the high-temperature float charging performance of the secondary battery.

In some embodiments of this application, Dᵥ50 of the second negative electrode active material is 10 µm to 11.5 µm, and Dᵥ90 of the second negative electrode active material is 19.4 µm to 24.8 µm. For example, the Dᵥ50 of the second negative electrode active material may be 10 µm, 10.3 µm, 10.5 µm, 10.7 µm, 11 µm, 11.2 µm, 11.5 µm, or in a range of any two of these values, and the Dᵥ90 of the second negative electrode active material may be 19.4 µm, 20 µm, 20.5 µm, 21 µm, 21.6 µm, 22 µm, 22.4 µm, 23 µm, 23.5 µm, 24 µm, 24.8 µm, or in a range of any two of these values. Controlling the Dᵥ50 and Dᵥ90 of the second negative electrode active material within the above ranges can improve the wettability of the electrolyte solution to the negative electrode plate, and reduce side reactions between the negative electrode plate and the electrolyte solution during cycling. This is conducive to reducing the initial impedance of the secondary battery and the impedance growth during cycling, thereby improving the kinetic performance of the secondary battery, as well as improving the high-temperature float charging performance of the secondary battery.

In this application, Dᵥ50 refers to a particle size at which the cumulative volume percentage reaches 50% in the volume-based particle size distribution, measured from the small particle size. Dᵥ90 refers to a particle size at which the cumulative volume percentage reaches 90% in the volume-based particle size distribution, measured from the small particle size. In some embodiments, the Dᵥ90 of the first negative electrode active material is less than the thickness H₁ of the first negative electrode material layer.

Generally, the first negative electrode active materials and the second negative electrode active materials with different Dᵥ50 and Dᵥ90 can be obtained through mechanical crushing (for example, ball milling). For example, the Dᵥ50 and Dᵥ90 of the first negative electrode active material and the Dᵥ50 and Dᵥ90 of the second negative electrode active material can be controlled by controlling the ball milling time. When other conditions remain unchanged, extending the ball milling time reduces the Dᵥ50 of the first negative electrode active material; and shortening the ball milling time increases the Dᵥ50 of the first negative electrode active material. When other conditions remain unchanged, extending the ball milling time reduces the Dᵥ90 of the first negative electrode active material; and shortening the ball milling time increases the Dᵥ90 of the first negative electrode active material. When other conditions remain unchanged, extending the ball milling time reduces the Dᵥ50 of the second negative electrode active material; and shortening the ball milling time increases the Dᵥ50 of the second negative electrode active material. When other conditions remain unchanged, extending the ball milling time reduces the Dᵥ90 of the second negative electrode active material; and shortening the ball milling time increases the Dᵥ90 of the second negative electrode active material.

In some embodiments of this application, the first negative electrode active material and the second negative electrode active material each independently include at least one of natural graphite, artificial graphite, soft carbon, hard carbon, meso-carbon microbead, silicon-carbon compound SiC, silicon oxide compound SiOₓ (0<x≤2), or lithium titanate. The negative electrode plate includes the first negative electrode material layer and the second negative electrode material layer, with the values of H₁ and H₂ and the relationship between the Dᵥ50 of the first negative electrode active material and the Dᵥ50 of the second negative electrode active material controlled within the ranges of this application, and the electrolyte solution includes lithium difluorophosphate and propyl propionate, with the values of W₁, W₂, and W₁×H₁ controlled within the ranges of this application. On such basis, use of the foregoing first negative electrode active material and second negative electrode active material allows the secondary battery to have good kinetic performance and high-temperature float charging performance. In this application, the types of the first negative electrode active material and the second negative electrode active material may be the same or different.

In this application, the first negative electrode material layer includes the first negative electrode active material and may further include a first negative electrode binder and a first negative electrode conductive agent, or the first negative electrode material layer may further include a first negative electrode binder, a first negative electrode conductive agent, or a first thickener. Based on a mass of the first negative electrode material layer, the mass percentage of the first negative electrode active material may be 86% to 99%, a mass percentage of the first negative electrode binder may be 0.5% to 5%, a mass percentage of the first negative electrode conductive agent may be 0.5% to 5%, and a mass percentage of the first thickener may be 0% to 4%.

In this application, the second negative electrode material layer includes the second negative electrode active material and may further include a second negative electrode binder and a second negative electrode conductive agent, or the second negative electrode material layer may further include a second negative electrode binder, a second negative electrode conductive agent, or a second thickener. Based on a mass of the second negative electrode material layer, the mass percentage of the second negative electrode active material may be 86% to 99%, a mass percentage of the second negative electrode binder may be 0.5% to 5%, a mass percentage of the second negative electrode conductive agent may be 0.5% to 5%, and a mass percentage of the second thickener may be 0% to 4%.

This application imposes no particular limitations on types of the first negative electrode binder, the second negative electrode binder, the first negative electrode conductive agent, and the second negative electrode conductive agent, as long as the purpose of this application can be achieved. For example, the first negative electrode binder and the second negative electrode binder may each independently include, but are not limited to, at least one of polyacrylic acid, sodium polyacrylate, potassium polyacrylate, lithium polyacrylate, polyimide, polyvinyl alcohol, polyamideimide, styrene-butadiene rubber, or polyvinylidene fluoride. For example, the first negative electrode conductive agent and the second negative electrode conductive agent may each independently include, but are not limited to, at least one of conductive carbon black (Super P), carbon nanotubes (CNTs), carbon fibers, flake graphite, graphene, a metal material, or a conductive polymer. The conductive carbon black may include, but is not limited to, at least one of acetylene black or Ketjen black. The carbon nanotubes may include, but are not limited to, single-walled carbon nanotubes and/or multi-walled carbon nanotubes. The carbon fibers may include, but are not limited to, vapor-grown carbon fibers (VGCF) and/or nano carbon fibers. The metal material may include, but is not limited to, metal powders and/or metal fibers, and specifically, the metal may include, but is not limited to, at least one of copper, nickel, aluminum, or silver. The conductive polymer may include, but is not limited to, at least one of polyphenylene derivative, polyaniline, polythiophene, polyacetylene, or polypyrrole. This application imposes no particular limitations on types of the first thickener and the second thickener, as long as the purpose of this application can be achieved. For example, the first thickener and the second thickener may each independently include, but are not limited to, at least one of sodium carboxymethyl cellulose or lithium carboxymethyl cellulose.

This application imposes no particular limitation on the negative electrode current collector, as long as the purpose of this application can be achieved. For example, the negative electrode current collector may include copper foil, copper alloy foil, nickel foil, stainless steel foil, titanium foil, nickel foam, copper foam, or a composite current collector. For example, the composite current collector may be a lithium-copper composite current collector, a carbon-copper composite current collector, a nickel-copper composite current collector, a titanium-copper composite current collector, or the like. This application imposes no particular limitation on a thickness of the negative electrode current collector, as long as the purpose of this application can be achieved. For example, the thickness of the negative electrode current collector may be 4 µm to 15 µm.

Optionally, the negative electrode material layer may further include a conductive layer, where the conductive layer is located between the negative electrode current collector and the second negative electrode material layer. This application imposes no particular limitation on the composition of the conductive layer, which may be a conductive layer commonly used in the art. For example, the conductive layer includes a conductive agent and a binder. This application imposes no particular limitation on the conductive agent and the binder in the conductive layer, for example, may be at least one of the first negative electrode conductive agent and the first negative electrode binder described above.

This application imposes no particular limitation on the preparation method of the negative electrode plate, as long as the purpose of this application can be achieved. For example, the preparation method of the negative electrode plate may include, but is not limited to, the following steps: (1) preparing a first negative electrode slurry and a second negative electrode slurry; (2) applying the second negative electrode slurry on one surface of the negative electrode current collector, and drying it to form a second negative electrode material layer on one surface of the negative electrode current collector; then applying the first negative electrode slurry on a surface of the second negative electrode material layer, and drying it to sequentially form the second negative electrode material layer and the first negative electrode material layer on one surface of the negative electrode current collector; (3) repeating the above steps on the other surface of the negative electrode current collector to form the first negative electrode material layer and the second negative electrode material layer on both surfaces of the negative electrode current collector; and (4) performing cold pressing, cutting, and negative electrode tab welding to obtain the negative electrode plate.

Typically, the thickness H₁ of the first negative electrode material layer can be controlling by controlling the coating weight of the first negative electrode material layer. For example, when other conditions remain unchanged, increasing the coating weight of the first negative electrode material layer increases H₁; and decreasing the coating weight of the first negative electrode material layer decreases H₁.

Typically, the thickness H₂ of the second negative electrode material layer can be controlled by controlling the coating weight of the second negative electrode material layer. For example, when other conditions remain unchanged, increasing the coating weight of the second negative electrode material layer increases H₂; and decreasing the coating weight of the second negative electrode material layer decreases H₂.

In this application, the secondary battery further includes a positive electrode plate, where the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector along its thickness direction, or may be disposed on both surfaces of the positive electrode current collector along its thickness direction. It should be noted that the "surface" herein may refer to the entire region of the surface of the positive electrode current collector or a partial region of the surface of the positive electrode current collector, which is not particularly limited in this application, as long as the purpose of this application can be achieved.

This application imposes no particular limitation on the positive electrode current collector, as long as the purpose of this application can be achieved. For example, the positive electrode current collector may include aluminum foil, aluminum alloy foil, or a composite current collector (for example, an aluminum-carbon composite current collector). This application imposes no particular limitation on a thickness of the positive electrode current collector, as long as the purpose of this application can be achieved. For example, the thickness of the positive electrode current collector may be 5 µm to 20 µm.

The positive electrode material layer includes a positive electrode active material. This application imposes no particular limitation on the positive electrode active material, as long as the purpose of this application can be achieved. For example, the positive electrode active material may include, but is not limited to, at least one of lithium nickel cobalt manganese oxide (for example, NCM811, NCM622, NCM523, or NCM111), lithium nickel cobalt aluminate, lithium iron phosphate, lithium-rich manganese-based material, lithium cobalt oxide (LiCoO₂), lithium manganese oxide, lithium manganese iron phosphate, or lithium titanate.

The positive electrode material layer may further include a positive electrode conductive agent and a positive electrode binder. This application imposes no particular limitation on types of the positive electrode conductive agent and the positive electrode binder, as long as the purpose of this application can be achieved. For example, they may be at least one of the first negative electrode conductive agent and the first negative electrode binder described above. This application imposes no particular limitation on a mass ratio of the positive electrode active material, the positive electrode conductive agent, and the positive electrode binder in the positive electrode material layer, and those skilled in the art can make selection according to actual needs, as long as the purpose of this application can be achieved.

This application imposes no particular limitation on the thickness of the positive electrode material layer, as long as the purpose of this application can be achieved. For example, the thickness of the positive electrode material layer may be 30 µm to 120 µm. This application imposes no particular limitation on a compacted density of the positive electrode material layer, as long as the purpose of this application can be achieved. For example, the compacted density of the positive electrode material layer may be 3 g/cm³ to 5 g/cm³.

Optionally, the positive electrode plate may further include a conductive layer, where the conductive layer is located between the positive electrode current collector and the positive electrode material layer. The composition of the conductive layer is not particularly limited and may be a conductive layer commonly used in the art. The conductive layer includes a conductive agent and a binder. This application imposes no particular limitation on the conductive agent and the binder in the conductive layer, for example, may be at least one of the first negative electrode conductive agent and the first negative electrode binder described above.

In this application, the secondary battery further includes a separator. This application imposes no particular limitation on the separator, as long as the purpose of this application can be achieved. For example, a material of the separator may include, but is not limited to, at least one of polyethylene (PE), polypropylene (PP)-based polyolefin (PO), polyester (for example, a polyethylene terephthalate (PET) film), cellulose, polyimide (PI), polyamide (PA), spandex, or aramid. A type of the separator may include at least one of woven film, non-woven film, microporous film, composite film, calendered film, or spun film.

In some embodiments, the separator may include a substrate layer and a surface treatment layer. The substrate layer may be a non-woven fabric, a film, or a composite film with a porous structure, and a material of the substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used.

Optionally, the surface treatment layer is disposed on at least one surface of the substrate layer, and the surface treatment layer may be a polymer layer or an inorganic layer, or a layer formed by mixing a polymer and an inorganic substance.

In some embodiments, the inorganic layer includes inorganic particles and a binder. This application imposes no particular limitation on the inorganic particles. For example, the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. This application imposes no particular limitation on the binder in the inorganic layer. For example, the binder in the inorganic layer may be at least one of the first negative electrode binder described above. In some embodiments, the polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

In this application, a thickness of the separator is not particularly limited, as long as the purpose of this application can be achieved. For example, the thickness of the separator may be 3 µm to 30 µm.

In this application, the secondary battery further includes a housing configured to accommodate the positive electrode plate, the separator, the negative electrode plate, the electrolyte solution, and other components known in the field of secondary batteries. This application imposes no particular limitations on the other components. The housing is not particularly limited in this application, and may be a housing known in the art, as long as the purpose of this application can be achieved. For example, the housing may be a hard-shell housing or a flexible housing. A material of the hard-shell housing may be metal. This application imposes no particular limitation on a type of the metal, and a hard-shell housing of any metal known in the art may be used, as long as the purpose of this application can be achieved. The flexible housing may be a metal-plastic film, such as an aluminum-plastic film or a steel-plastic film.

The preparation process of the secondary battery of this application is well known to those skilled in the art, and is not particularly limited in this application. For example, the preparation process of the secondary battery may include, but is not limited to, the following steps: stacking the positive electrode plate, the separator, and the negative electrode plate in sequence, performing operations such as winding or folding as needed to obtain an electrode assembly with a wound structure, placing the electrode assembly into a housing, injecting the electrolyte solution into the housing, and sealing the opening to obtain the secondary battery; or stacking the positive electrode plate, the separator, and the negative electrode plate in sequence, then fixing the four corners of the entire stacked structure with tape to obtain an electrode assembly with a stacked structure, placing the electrode assembly into a housing, injecting the electrolyte solution into the housing, and sealing the opening to obtain the secondary battery. In addition, an overcurrent protection element, a guide plate, or the like may be placed in the housing as needed to prevent pressure rise, overcharging, or overdischarging inside the secondary battery.

A second aspect of this application provides an electronic apparatus including the secondary battery according to the first aspect of this application. The secondary battery provided in this application has good kinetic performance and high-temperature float charging performance, and therefore the electronic apparatus provided in this application has a relatively long service life and good performance.

This application imposes no particular limitation on a type of the electronic apparatus, which may be any electronic apparatus known in the prior art. For example, the electronic apparatus may include, but is not limited to, a notebook computer, a pen-input computer, a mobile computer, an e-book reader, a portable phone, a portable fax machine, a portable copier, a portable printer, a stereo headset, a video recorder, an LCD television, a portable cleaner, a portable CD player, a mini disc player, a transceiver, an electronic organizer, a calculator, a memory card, a portable recorder, a radio, a backup power supply, a motor, an automobile, a motorcycle, an electric bicycle, a bicycle, a lighting fixture, a toy, a gaming console, a clock, an electric tool, a flashlight, a camera, a large household battery, or a lithium-ion capacitor.

### Examples

The following examples and comparative examples are provided to more specifically illustrate the embodiments of this application. Various tests and evaluations are conducted according to the methods described below. Unless otherwise specified, "parts" and "%" are based on mass.

### Test methods and devices:

### Thickness test

After the lithium-ion batteries of each example and comparative example were discharged to 3 V at 0.2C, the negative electrode plate was obtained through disassembly, cleaned with dimethyl carbonate (DMC), and dried at 60°C. The cross-section of the negative electrode plate along its thickness direction was polished using argon ion polishing. Then, a scanning electron microscope (SEM) was used to observe the cross-section of the negative electrode plate and measure the thickness H₁ of the first negative electrode material layer, the thickness H₂ of the second negative electrode material layer, and H₂/H₁.

### Tests of Dᵥ50 and Dᵥ90 of first negative electrode active material and second negative electrode active material

The Dᵥ50 and Dᵥ90 of the first negative electrode active material and the second negative electrode active material were tested using a laser particle size analyzer (model MS3000) in accordance with the national standard "Particle Size Distribution - Laser Diffraction Method" (GB/T19077-2016).

### Tests of electrolyte solution components

After discharged to 3 V at a constant current of 0.2C, the lithium-ion battery was disassembled, and the electrolyte solution was collected by centrifugation, extrusion, or other methods. The components of the electrolyte solution and their contents were tested using a gas chromatography-mass spectrometry (GC-MS, model Agilent 8890) and ion chromatography (IC, model AQUION ion chromatograph).

### Initial impedance test

The lithium-ion battery was placed in a 25°C constant temperature chamber and left standing for 4 hours. It was then charged at a constant current of 0.7C to the rated voltage (4.48 V in the embodiments of this application), charged at a constant voltage of 4.48 V until the current reached 0.05C, and left standing for 2 hours. Subsequently, it was discharged at a constant current of 0.2C to a voltage of 3.0 V, and the capacity of the lithium-ion battery measured at this point was recorded as the reference capacity C₁, that is, the capacity at 100%SOC (State of Charge, state of charge). The lithium-ion battery was then charged at a constant current of 0.7C to a voltage of 4.48 V, charged at a constant voltage of 4.48 V until the current reached 0.05C, and left standing for 10 minutes. It was then discharged at a constant current of 0.1C sequentially to 0.3C₁ (70%SOC), 0.8C₁ (20%SOC), and 0.9C₁ (10%SOC), and the voltage and current of the lithium-ion battery at these three different SOCs were tested, respectively. The ratio of voltage to current was calculated to obtain the impedance at 70%SOC recorded as R₁, the impedance at 20%SOC recorded as R₂, and the impedance at 10%SOC recorded as R₃. The initial impedance of the lithium-ion battery was evaluated based on the values of R₁, R₂, and R₃. The smaller the values of R₁, R₂, and R₃, the smaller the initial impedance; the larger the values of R₁, R₂, and R₃, the larger the initial impedance.

### Impedance growth test

The lithium-ion battery was placed in a 25°C constant temperature chamber and left standing for 4 hours, then discharged at a constant current of 0.02C sequentially to 0.3C₁ (70%SOC), 0.8C₁ (20%SOC), and 0.9C₁ (10%SOC). The voltage of the lithium-ion battery at 70%SOC was recorded as U'_{70%}, and the current was recorded as I'_{70%}; the voltage at 20%SOC was recorded as U'_{20%}, and the current was recorded as I'_{200%}; and the voltage at 10%SOC was recorded as U'_{10%}, and the current was recorded as I'_{10%}. The lithium-ion battery was charged at a constant current of 0.7C to a voltage of 4.48 V, charged at a constant voltage of 4.48 V until the current reached 0.05C, left standing for 2 hours, and then discharged at a constant current of 0.5C to a voltage of 3.0 V. This was one charge-discharge cycle. The lithium-ion battery was subjected to charge-discharge cycles according to the above method, and a discharge capacity recovery test was performed every 50 charge-discharge cycles. For the recovery test, the lithium-ion battery was charged at a constant current of 0.7C to a voltage of 4.48 V, charged at a constant voltage of 4.48 V until the current reached 0.05C, left standing for 2 hours, and then discharged at a constant current of 0.2C sequentially to 0.3C₁ (70%SOC), 0.8C₁ (20%SOC), and 0.9C₁ (10%SOC). The voltage of the lithium-ion battery at 70%SOC was recorded as U_{70%}, and the current was recorded as I_{70%}; the voltage at 20%SOC was recorded as U_{20%}, and the current was recorded as I_{20%}; and the voltage at 10%SOC was recorded as U_{10%}, and the current was recorded as I_{10%}. The values of R_{70%}, R_{20%}, and R_{10%} were calculated using the following formulas: R_{70%} = (U_{70%} - U'_{70%})/(I_{70%} - I'_{70%}); R_{20%} = (U_{20%} - U'_{20%})/(I_{20%} - I'_{20%}); and R_{10%} = (U_{10%} - U'_{10%})/(T_{10%} - I'_{10%}). The average of R_{70%}, R_{20%}, and R_{10%} was calculated as the impedance value of the lithium-ion battery at the corresponding cycle count. The charge-discharge cycling was continued up to 1000 cycles according to the above method. Three lithium-ion batteries were tested for each example and comparative example, and the average impedance of the three lithium-ion batteries was calculated as the impedance of the lithium-ion battery. The impedance of the lithium-ion battery at the 300th cycle was recorded as R₃₀₀, and the impedance at the 1000th cycle was recorded as R₁₀₀₀. The impedance growth of the lithium-ion battery was evaluated by calculating K using the following formula: K = (R₁₀₀₀ - R₃₀₀)/(1000 - 300). The smaller the value of K, the smaller the impedance growth; the larger the value of K, the larger the impedance growth.

### High-temperature float charging performance test

The lithium-ion battery was placed in a 25°C constant temperature chamber and left standing for 4 hours, then charged at a constant current of 0.7C to 4.48 V, charged at a constant voltage of 4.48 V until the current reached 0.05C, left standing for 2 hours, and then discharged at a constant current of 0.2C to a voltage of 3.0 V. The lithium-ion battery was then charged at a constant current of 0.7C to 4.48 V, and charged at a constant voltage of 4.48 V until the current reached 0.05C, and the thickness of the lithium-ion battery at this time was measured and recorded as the initial thickness T₀. The lithium-ion battery was placed in a 55°C constant temperature chamber and left standing for 1.5 hours. The lithium-ion battery was charged at a constant current of 0.4C to 4.48 V, and charged at a constant voltage of 4.48 V until the current reached 60 mA. Charging was continued at a constant current (100 mA) and a constant voltage (4.48 V), and the thickness of the lithium-ion battery was measured every 96 hours and recorded as Tᵢ. The thickness change rate of the lithium-ion battery was recorded as Tᵢ/T₀. When the value of Tᵢ/T₀ reached 108.5%, the charging time of the lithium-ion battery at constant current (100 mA) and constant voltage (4.48 V) was recorded. Three lithium-ion batteries were tested for each example and comparative example, and the average of the charging times of the three lithium-ion batteries was calculated and recorded as D. The high-temperature float charging performance was evaluated based on the value of D. The larger the value of D, the better the high-temperature float charging performance; the smaller the value of D, the worse the high-temperature float charging performance.

### Example 1-1

### <Preparation of negative electrode plate>

The first negative electrode active material artificial graphite, the first negative electrode binder styrene-butadiene rubber (SBR, with a weight-average molecular weight Mw=5×10⁶), the first thickener sodium carboxymethyl cellulose (CMC-Na, Mw=7×10⁵), and the first negative electrode conductive agent conductive carbon black (Super P) were mixed at a mass ratio of 96:1.5:1.5:1. Deionized water was then added as a solvent to prepare a slurry with a solid content of 50wt%, followed by vacuum stirring to obtain a uniform first negative electrode slurry.

The second negative electrode active material artificial graphite, the second negative electrode binder styrene-butadiene rubber (SBR, Mw=5×10⁶), the second thickener sodium carboxymethyl cellulose (CMC-Na, Mw=7×10⁵), and the second negative electrode conductive agent conductive carbon black (Super P) were mixed at a mass ratio of 96:1.5:1.5:1. Deionized water was then added as a solvent to prepare a slurry with a solid content of 50wt%, followed by vacuum stirring to obtain a uniform second negative electrode slurry.

The second negative electrode slurry was evenly applied on one surface of a 10 µm-thick negative electrode current collector copper foil, with a coating weight of 5.81 mg/cm², followed by drying at 85°C to obtain a negative electrode plate coated with the second negative electrode material layer on one side. Then, the first negative electrode slurry was evenly applied on the surface of the second negative electrode material layer far from the negative electrode current collector, with a coating weight of 2.33 mg/cm², followed by drying at 85°C to obtain a negative electrode plate coated with the second negative electrode material layer and the first negative electrode material layer on one side. Subsequently, the above steps were repeated on the other surface of the copper foil to obtain a negative electrode plate coated with the second negative electrode material layer and the first negative electrode material layer on both sides. After cold pressing, cutting, and welding with a nickel tab as the negative electrode tab, a negative electrode plate with a dimension of 76 mm×867 mm was obtained for use. The thickness H₁ of the first negative electrode material layer and the thickness H₂ of the second negative electrode material layer are shown in Table 1, and the Dᵥ50 and Dᵥ90 of the first negative electrode active material and the second negative electrode active material are shown in Table 3.

### <Preparation of electrolyte solution>

In an argon atmosphere glove box with a water content of less than 10 ppm, other organic solvents ethylene carbonate (EC), propylene carbonate (PC), and diethyl carbonate (DEC) were mixed to uniformity at a mass ratio of 1:1:1 as the base solvent. Then, lithium salt lithium hexafluorophosphate (LiPF₆), lithium difluorophosphate, and propyl propionate were added to the base solvent, and the mixture was stirred to uniformity to obtain the electrolyte solution. Based on the mass of the electrolyte solution, the mass percentage of the lithium salt LiPF₆ was 12.5%, the mass percentage W₁% of lithium difluorophosphate and the mass percentage W₂% of propyl propionate are shown in Table 1, and the remainder is the base solvent.

### <Preparation of positive electrode plate>

The positive electrode active material lithium cobalt oxide, the positive electrode conductive agent conductive carbon black (Super P), the positive electrode conductive agent carbon nanotubes (CNT), and the positive electrode binder polyvinylidene fluoride (PVDF, Mw=7×10⁶) were mixed at a mass ratio of 97:0.8:0.7:1.5. N-methylpyrrolidone (NMP) was added as a solvent to prepare a slurry with a solid content of 70wt%, followed by vacuum stirring to obtain a uniform positive electrode slurry. The positive electrode slurry was evenly applied on one surface of a 10 µm-thick positive electrode current collector aluminum foil, followed by drying at 120°C to obtain a positive electrode plate coated with the positive electrode material layer on one side. Then, the above steps were repeated on the other surface of the aluminum foil to obtain a positive electrode plate coated with the positive electrode material layer on both sides. After drying at 120°C, cold pressing, cutting, and welding with an aluminum tab as the positive electrode tab, a positive electrode plate with a dimension of 74 mm×851 mm was obtained for use. The thickness of the positive electrode material layer was 92 µm, and the compacted density of the positive electrode material layer was 4.15 g/cm³.

### <Preparation of separator>

A porous polyethylene film with a thickness of 7 µm (provided by Celgard) was used as the substrate layer. Inorganic particles aluminum oxide and the inorganic layer binder polyvinylidene fluoride (Mw=7×10⁶) were mixed at a mass ratio of 4:1, N-methylpyrrolidone (NMP) was added, and the mixture was stirred to uniformity under the action of a vacuum mixer to obtain an inorganic slurry with a solid content of 30wt%. The inorganic slurry was evenly applied on one surface of the substrate layer to form an inorganic layer with a thickness of 2 µm. Then, the polymer polyvinylidene fluoride (Mw=7×10⁶) was dissolved in deionized water to obtain a polymer layer slurry with a solid content of 25wt%. The polymer layer slurry was evenly applied on the surface of the inorganic layer on one side and the surface of the substrate layer on the other side, with a coating weight of 2.5 mg/cm², to form a polymer layer, resulting in a separator with an inorganic layer and a polymer layer on one side and only a polymer layer on the other side.

### <Preparation of lithium-ion battery>

The positive electrode plate, separator, and negative electrode plate prepared above were stacked in sequence, and the resulting stack was wound to obtain an electrode assembly with a wound structure, where a side of the separator containing both the inorganic layer and the polymer layer faced the positive electrode plate, and a side containing only the polymer layer faced the negative electrode plate. The electrode assembly was placed in an aluminum-plastic film packaging bag and dried, followed by electrolyte solution injection. After processes such as vacuum packaging, standing, formation (charging at a constant current of 0.3C to 3.5 V, then charging at a constant current of 1C to 3.9 V), capacity testing, degassing, and trimming, the lithium-ion battery was obtained.

### Examples 1-2 to 1-16

Except that the relevant preparation parameters were adjusted according to Table 1 in <Preparation of negative electrode plate> and <Preparation of electrolyte solution>, all other conditions were the same as those in Example 1-1. H₁ was controlled by controlling the coating weight of the first negative electrode material layer, and H₂ was controlled by controlling the coating weight of the second negative electrode material layer. When the mass percentage W₁% of lithium difluorophosphate or the mass percentage W₂% of propyl propionate changed, the mass percentage of the base solvent changed accordingly, while the mass ratio of each component in the base solvent and the mass percentage of the lithium salt remained unchanged.

### Examples 2-1 to 2-7

Except that the coating weight of the first negative electrode material layer was adjusted to achieve the H₁ value shown in Table 2 in <Preparation of negative electrode plate>, and that the polynitrile compound 1,2,3-tris(2-cyanoethoxy)propane was added according to Table 2 in <Preparation of electrolyte solution>, all other conditions were the same as those in Example 1-1. When the mass percentage W₃% of the polynitrile compound changed, the mass percentage of the base solvent changed accordingly, while the mass ratio of each component in the base solvent and the mass percentages of the lithium salt, lithium difluorophosphate, and propyl propionate remained unchanged.

### Examples 2-8 to 2-10

Except that the propionate compound methyl propionate was added according to Table 2 in <Preparation of electrolyte solution>, all other conditions were the same as those in Example 1-1. When the mass percentage W₂% of propyl propionate and the mass percentage W₄% of the propionate compound changed, the mass percentage of the base solvent changed accordingly, while the mass ratio of each component in the base solvent and the mass percentages of the lithium salt and lithium difluorophosphate remained unchanged.

### Example 2-11

Except that the polynitrile compound 1,2,3-tris(2-cyanoethoxy)propane and the propionate compound methyl propionate were added according to Table 2 in <Preparation of electrolyte solution>, with the mass percentage of the base solvent changed accordingly, while the mass ratio of each component in the base solvent and the mass percentages of the lithium salt and lithium difluorophosphate unchanged, all other conditions were the same as those in Example 1-1.

### Examples 3-1 to 3-8

Except that the relevant preparation parameters were adjusted according to Table 3 in <Preparation of negative electrode plate>, all other conditions were the same as those in Example 1-1. The Dᵥ50 and Dᵥ90 of the first negative electrode active material and the Dᵥ50 and Dᵥ90 of the second negative electrode active material were controlled by controlling the ball milling time.

### Comparative Example 1

Except that the following preparation method was used in <Preparation of negative electrode plate>, all other conditions were the same as those in Example 1-1.

### <Preparation of negative electrode plate>

The negative electrode active material artificial graphite, the negative electrode binder styrene-butadiene rubber (SBR, Mw=5×10⁶), the thickener sodium carboxymethyl cellulose (CMC-Na, Mw=7×10⁵), and the negative electrode conductive agent conductive carbon black (Super P) were mixed at a mass ratio of 96:1.5:1.5:1. Deionized water was then added as a solvent to prepare a slurry with a solid content of 50wt%, followed by vacuum stirring to obtain a uniform negative electrode slurry. The negative electrode slurry was evenly applied on one surface of a 10 µm-thick negative electrode current collector copper foil, with a coating weight of 8.14 mg/cm², followed by drying at 85°C to obtain a negative electrode plate coated with the negative electrode material layer on one side. Subsequently, the above steps were repeated on the other surface of the copper foil to obtain a negative electrode plate coated with the negative electrode material layer on both sides. After cold pressing, cutting, and welding with a nickel tab as the negative electrode tab, a negative electrode plate with a dimension of 76 mm×867 mm was obtained for use. The thickness of the negative electrode material layer was 105 µm, and the Dᵥ50 of the negative electrode active material was 11 µm, and the Dᵥ90 was 22 µm.

### Comparative Examples 2 to 5

Except that the relevant preparation parameters were adjusted according to Table 1 in <Preparation of negative electrode plate>, all other conditions were the same as those in Example 1-1. H₁ was controlled by controlling the coating weight of the first negative electrode material layer, and H₂ was controlled by controlling the coating weight of the second negative electrode material layer.

### Comparative Example 6

Except that no lithium difluorophosphate was added in <Preparation of electrolyte solution>, with the mass percentage of the base solvent changed accordingly, while the mass ratio of each component in the base solvent and the mass percentages of the lithium salt and propyl propionate unchanged, all other conditions were the same as those in Example 1-1.

### Comparative Examples 7 and 8

Except that the relevant preparation parameters were adjusted according to Table 1 in <Preparation of electrolyte solution>, all other conditions were the same as those in Example 1-1. When the mass percentage W₁% of lithium difluorophosphate changed, the mass percentage of the base solvent changed accordingly, while the mass ratio of each component in the base solvent and the mass percentages of the lithium salt and propyl propionate remained unchanged.

### Comparative Example 9

Except that no propyl propionate was added in <Preparation of electrolyte solution>, with the mass percentage of the base solvent changed accordingly, while the mass ratio of each component in the base solvent and the mass percentages of the lithium salt and lithium difluorophosphate unchanged, all other conditions were the same as those in Example 1-1.

### Comparative Examples 10 and 11

Except that the relevant preparation parameters were adjusted according to Table 1 in <Preparation of electrolyte solution>, all other conditions were the same as those in Example 1-1. When the mass percentage W₂% of propyl propionate changed, the mass percentage of the base solvent changed accordingly, while the mass ratio of each component in the base solvent and the mass percentages of the lithium salt and lithium difluorophosphate remained unchanged.

### Comparative Example 12

Except that no lithium difluorophosphate or propyl propionate was added in <Preparation of electrolyte solution>, with the mass percentage of the base solvent changed accordingly, while the mass ratio of each component in the base solvent and the mass percentage of the lithium salt unchanged, all other conditions were the same as those in Example 1-1.

### Comparative Example 13

Except that the relevant preparation parameters were adjusted according to Table 1 in <Preparation of negative electrode plate>, with the Dᵥ50 and Dᵥ90 of the first negative electrode active material being 11 µm and 22 µm respectively, and the Dᵥ50 and Dᵥ90 of the second negative electrode active material being 13 µm and 23 µm respectively, all other conditions were the same as those in Example 1-1.

The preparation parameters and performance parameters of each example and comparative example are shown in Tables 1 to 3.

**Table 1**

| | H₁ (µm) | H₂ (µm) | H₂/H₁ | W₁ (%) | W₂ (%) | W₁×H₁ | W₁/H₁ | W₂×H₁ | R₁ (mΩ) | R₂ (mΩ) | R₃ (mΩ) | K (×10⁻³ mQ/cycle) | D (h) |
|---|---|---|---|---|---|---|---|---|---|---|---|---|---|
| Example 1-1 | 30 | 75 | 2.5 | 0.5 | 35 | 15 | 0.017 | 1050 | 65.8 | 60.3 | 61.7 | 6.14 | 1248 |
| Example 1-2 | 20 | 75 | 3.75 | 0.5 | 35 | 10 | 0.025 | 700 | 66.5 | 61.2 | 62.3 | 6.18 | 1152 |
| Example 1-3 | 40 | 80 | 2 | 0.5 | 35 | 20 | 0.013 | 1400 | 66.2 | 63.4 | 64.6 | 6.20 | 1130 |
| Example 1-4 | 30 | 60 | 2 | 0.5 | 35 | 15 | 0.017 | 1050 | 66.0 | 62.8 | 63.5 | 6.18 | 1124 |
| Example 1-5 | 30 | 90 | 3 | 0.5 | 35 | 15 | 0.017 | 1050 | 66.5 | 63.2 | 64.1 | 6.17 | 1137 |
| Example 1-6 | 20 | 90 | 4.5 | 0.5 | 35 | 10 | 0.025 | 700 | 67.4 | 64.6 | 65.3 | 6.22 | 1128 |
| Example 1-7 | 40 | 80 | 2 | 0.1 | 35 | 4 | 0.0025 | 1400 | 68.3 | 65.4 | 67.2 | 6.25 | 1056 |
| Example 1-8 | 30 | 75 | 2.5 | 0.2 | 35 | 6 | 0.007 | 1050 | 66.0 | 60.8 | 62.1 | 6.16 | 1210 |
| Example 1-9 | 30 | 75 | 2.5 | 1 | 35 | 30 | 0.033 | 1050 | 66.3 | 62.0 | 65.2 | 6.17 | 1152 |
| Example 1-10 | 35 | 75 | 2.14 | 1 | 35 | 35 | 0.029 | 1225 | 67.0 | 62.4 | 66.4 | 6.22 | 1146 |
| Example 1-11 | 40 | 80 | 2 | 0.2 | 35 | 8 | 0.005 | 1400 | 67.3 | 64.2 | 65.3 | 6.21 | 1128 |
| Example 1-12 | 20 | 75 | 3.75 | 1 | 35 | 20 | 0.05 | 700 | 67.5 | 63.4 | 66.5 | 6.24 | 1143 |
| Example 1-13 | 30 | 75 | 2.5 | 0.5 | 10 | 15 | 0.017 | 300 | 67.9 | 62.4 | 63.8 | 6.17 | 1129 |
| Example 1-14 | 30 | 75 | 2.5 | 0.5 | 60 | 15 | 0.017 | 1800 | 66.8 | 62.7 | 65.8 | 6.16 | 1142 |
| Example 1-15 | 25 | 75 | 3 | 0.5 | 10 | 12.5 | 0.02 | 250 | 68.2 | 62.6 | 64.5 | 6.18 | 1123 |
| Example 1-16 | 40 | 80 | 2 | 0.5 | 60 | 20 | 0.013 | 2400 | 67.2 | 63.7 | 66.0 | 6.22 | 1124 |
| Comparative Example 1 | / | / | / | 0.5 | 35 | / | / | / | 70.1 | 65.7 | 68.6 | 10.29 | 932 |
| Comparative Example 2 | 10 | 75 | 7.5 | 0.5 | 35 | 5 | 0.05 | 350 | 69.3 | 67.4 | 68.2 | 9.77 | 1052 |
| Comparative Example 3 | 50 | 75 | 1.5 | 0.5 | 35 | 25 | 0.01 | 1750 | 68.3 | 65.4 | 69.2 | 9.80 | 1056 |
| Comparative Example 4 | 30 | 50 | 1.67 | 0.5 | 35 | 15 | 0.017 | 1050 | 70.3 | 66.4 | 68.8 | 9.79 | 1045 |
| Comparative Example 5 | 30 | 100 | 3.33 | 0.5 | 35 | 15 | 0.017 | 1050 | 70.2 | 66.7 | 69.2 | 9.81 | 1043 |
| Comparative Example 6 | 30 | 75 | 2.5 | / | 35 | / | / | 1050 | 70.3 | 67.4 | 69.2 | 9.84 | 952 |
| Comparative Example 7 | 30 | 75 | 2.5 | 0.05 | 35 | 1.5 | 0.002 | 1050 | 69.1 | 65.7 | 69.1 | 9.81 | 1061 |
| Comparative Example 8 | 30 | 75 | 2.5 | 1.5 | 35 | 45 | 0.05 | 1050 | 69.6 | 66.2 | 68.4 | 9.79 | 1053 |
| Comparative Example 9 | 30 | 75 | 2.5 | 0.5 | / | 15 | 0.017 | / | 70.5 | 68.1 | 69.0 | 9.84 | 960 |
| Comparative Example 10 | 30 | 75 | 2.5 | 0.5 | 5 | 15 | 0.017 | 150 | 69.7 | 66.6 | 68.9 | 9.80 | 1027 |
| Comparative Example 11 | 30 | 75 | 2.5 | 0.5 | 65 | 15 | 0.017 | 1950 | 70.2 | 66.8 | 68.3 | 9.79 | 1034 |
| Comparative Example 12 | 30 | 75 | 2.5 | / | / | / | / | / | 71.8 | 68.3 | 69.8 | 9.85 | 946 |
| Comparative Example 13 | 30 | 75 | 2.5 | 0.5 | 35 | 15 | 0.017 | 1050 | 75.3 | 71.7 | 74.8 | 11.3 | 879 |

| | | | | | | | | | | | | | |
|---|---|---|---|---|---|---|---|---|---|---|---|---|---|
| Note: "/" in Table 1 indicates no corresponding parameter. | | | | | | | | | | | | | |

From Examples 1-1 to 1-16 and Comparative Examples 1 to 13, it can be seen that in this application, the structure of the negative electrode plate and the composition of the electrolyte solution are designed, the values of H₁, H₂, W₁, W₂, and W₁×H₁ are controlled within the ranges of this application, and the Dᵥ50 of the first negative electrode active material is controlled to be greater than the Dᵥ50 of the second negative electrode active material, allowing the lithium-ion batteries to have smaller R₁, R₂, R₃, and K values, indicating smaller initial impedance and impedance growth during cycling, as well as larger D values, indicating good kinetic performance and high-temperature float charging performance of the lithium-ion batteries. In contrast, the lithium-ion battery of Comparative Example 1 does not include a first negative electrode material layer and a second negative electrode material layer in its negative electrode plate; the lithium-ion batteries of Comparative Examples 2 and 3 have H₁ values out of the range of this application; the lithium-ion batteries of Comparative Examples 4 and 5 have H₂ values out of the range of this application; the lithium-ion battery of Comparative Example 6 does not include lithium difluorophosphate in its electrolyte solution and has a value of W₁×H₁ out of the range of this application; the lithium-ion batteries of Comparative Examples 7 and 8 have W₁ and W₁×H₁ values out of the range of this application; the lithium-ion battery of Comparative Example 9 does not include propyl propionate in its electrolyte solution; the lithium-ion batteries of Comparative Examples 10 and 11 have W₂ values out of the range of this application; the lithium-ion battery of Comparative Example 12 does not include lithium difluorophosphate and propyl propionate in its electrolyte solution; and the lithium-ion battery of Comparative Example 13 has the Dᵥ50 of the first negative electrode active material less than the Dᵥ50 of the second negative electrode active material. The lithium-ion batteries of Comparative Examples 1 to 13 have larger R₁, R₂, R₃, and K values, indicating larger initial impedance and impedance growth during cycling, as well as smaller D values, indicating poor kinetic performance and high-temperature float charging performance of the lithium-ion batteries.

The value of H₁ typically affects the kinetic performance and high-temperature float charging performance of the lithium-ion battery. From Examples 1-1 to 1-3 and Comparative Examples 2 and 3, it can be seen that when the value of H₁ is too small, for example, in Comparative Example 2, the lithium-ion battery has larger R₁, R₂, R₃, and K values, indicating larger initial impedance and impedance growth during cycling, as well as a smaller D value; when the value of H₁ is too large, for example, in Comparative Example 3, the lithium-ion battery has larger R₁, R₂, R₃, and K values, indicating larger initial impedance and impedance growth during cycling, as well as a smaller D value, indicating poor kinetic performance and high-temperature float charging performance of the lithium-ion battery. When the value of H₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of H₂ typically affects the kinetic performance and high-temperature float charging performance of the lithium-ion battery. From Examples 1-1, 1-4, and 1-5, and Comparative Examples 4 and 5, it can be seen that when the value of H₂ is too small, for example, in Comparative Example 4, the lithium-ion battery has larger R₁, R₂, R₃, and K values, indicating larger initial impedance and impedance growth during cycling, as well as a smaller D value; when the value of H₂ is too large, for example, in Comparative Example 5, the lithium-ion battery has larger R₁, R₂, R₃, and K values, indicating larger initial impedance and impedance growth during cycling, as well as a smaller D value, indicating poor kinetic performance and high-temperature float charging performance of the lithium-ion battery. When the value of H₂ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The magnitude relationship between the Dᵥ50 of the first negative electrode active material and the Dᵥ50 of the second negative electrode active material typically affects the kinetic performance and high-temperature float charging performance of the lithium-ion battery. From Example 1-1 and Comparative Example 13, it can be seen that when the Dᵥ50 of the first negative electrode active material is less than the Dᵥ50 of the second negative electrode active material, for example, in Comparative Example 13, the lithium-ion battery has larger R₁, R₂, R₃, and K values, indicating larger initial impedance and impedance growth during cycling, as well as a smaller D value, indicating poor kinetic performance and high-temperature float charging performance of the lithium-ion battery. When the Dᵥ50 of the first negative electrode active material is greater than the Dᵥ50 of the second negative electrode active material, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₁ typically affects the kinetic performance and high-temperature float charging performance of the lithium-ion battery. From Examples 1-1, 1-7 to 1-10, and Comparative Examples 6 to 8, it can be seen that when the value of W₁ is too small, for example, in Comparative Examples 6 and 7, the lithium-ion battery has larger R₁, R₂, R₃, and K values, indicating larger initial impedance and impedance growth during cycling, as well as a smaller D value; when the value of W₁ is too large, for example, in Comparative Example 8, the lithium-ion battery has larger R₁, R₂, R₃, and K values, indicating larger initial impedance and impedance growth during cycling, as well as a smaller D value, indicating poor kinetic performance and high-temperature float charging performance of the lithium-ion battery. When the value of W₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₂ typically affects the kinetic performance and high-temperature float charging performance of the lithium-ion battery. From Examples 1-1, 1-13 and 1-14, and Comparative Examples 9 and 11, it can be seen that when the value of W₂ is too small, for example, in Comparative Examples 9 and 10, the lithium-ion battery has larger R₁, R₂, R₃, and K values, indicating larger initial impedance and impedance growth during cycling, as well as a smaller D value; when the value of W₂ is too large, for example, in Comparative Example 11, the lithium-ion battery has larger R₁, R₂, R₃, and K values, indicating larger initial impedance and impedance growth during cycling, as well as a smaller D value, indicating poor kinetic performance and high-temperature float charging performance of the lithium-ion battery. When the value of W₂ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₁×H₁ typically affects the kinetic performance and high-temperature float charging performance of the lithium-ion battery. From Examples 1-1, 1-7 to 1-10, and Comparative Examples 6 to 8, it can be seen that when the value of W₁×H₁ is too small, for example, in Comparative Examples 6 and 7, the lithium-ion battery has larger R₁, R₂, R₃, and K values, indicating larger initial impedance and impedance growth during cycling, as well as a smaller D value; when the value of W₁×H₁ is too large, for example, in Comparative Example 8, the lithium-ion battery has larger R₁, R₂, R₃, and K values, indicating larger initial impedance and impedance growth during cycling, as well as a smaller D value, indicating poor kinetic performance and high-temperature float charging performance of the lithium-ion battery. When the value of W₁×H₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of H₂/H₁ typically affects the kinetic performance and high-temperature float charging performance of the lithium-ion battery. From Examples 1-1 to 1-6, it can be seen that when the value of H₂/H₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₁/H₁ typically affects the kinetic performance and high-temperature float charging performance of the lithium-ion battery. From Examples 1-1 to 1-12, it can be seen that when the value of W₁/H₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₂×H₁ typically affects the kinetic performance and high-temperature float charging performance of the lithium-ion battery. From Examples 1-1 and 1-13 to 1-16, it can be seen that when the value of W₂×H₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

From FIG. 2, it can be seen that the lithium-ion battery of Example 1-1 has an impedance of 46.1 mΩ at the 300th cycle and an impedance of 50.4 mΩ at the 1000th cycle, with a K value of 6.14×10⁻³ mΩ/cycle. In contrast, the lithium-ion battery of Comparative Example 1 has an impedance of 59.0 mΩ at the 300th cycle and an impedance of 66.2 mΩ at the 1000th cycle, with a K value of 10.29×10⁻³ mΩ/cycle. The K value of Example 1-1 is smaller than that of Comparative Example 1, indicating that the lithium-ion battery of Example 1-1 has smaller impedance growth during cycling and better kinetic performance.

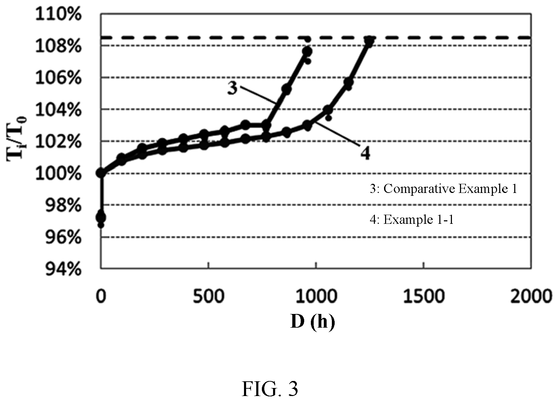

From FIG. 3, it can be seen that under the same charging time, the lithium-ion battery of Example 1-1 has a smaller thickness change rate. When the thickness change rate of the lithium-ion battery reaches 108.5%, the D value of Example 1-1 is 1248 h, while the D value of Comparative Example 1 is 932 h. The D value of Example 1-1 is larger than that of Comparative Example 1, indicating that the lithium-ion battery of Example 1-1 has better high-temperature float charging performance.

**Table 2**

| | H₁ (µm) | W₃ (%) | W₃×H₁ | W₂ (%) | W₄ (%) | W₂/W₄ | R₁ (mQ) | R₂ (mΩ) | R₃ (mQ) | K(×10⁻³ mΩ/cycle) | D (h) |
|---|---|---|---|---|---|---|---|---|---|---|---|
| Example 1-1 | 30 | / | / | 35 | 35 | 1 | 65.8 | 60.3 | 61.7 | 6.14 | 1248 |
| Example 1-13 | 30 | / | / | 10 | 10 | 1 | 67.9 | 62.4 | 63.8 | 6.17 | 1129 |
| Example 2-1 | 30 | 0.1 | 3 | 35 | 35 | 1 | 64.7 | 59.0 | 60.3 | 5.97 | 1344 |
| Example 2-2 | 30 | 1.7 | 51 | 35 | 35 | 1 | 62.1 | 57.2 | 59.7 | 5.78 | 1440 |
| Example 2-3 | 30 | 2.5 | 75 | 35 | 35 | 1 | 61.2 | 56.3 | 58.5 | 5.73 | 1452 |
| Example 2-4 | 30 | 5 | 150 | 35 | 35 | 1 | 63.5 | 59.9 | 60.2 | 5.86 | 1356 |
| Example 2-5 | 40 | 5 | 200 | 35 | 35 | 1 | 63.8 | 60.2 | 60.4 | 5.90 | 1353 |
| Example 2-6 | 30 | 0.05 | 1.5 | 35 | 35 | 1 | 65.3 | 59.2 | 60.5 | 5.99 | 1340 |
| Example 2-7 | 40 | 6 | 240 | 35 | 35 | 1 | 64.8 | 60.9 | 61.2 | 6.03 | 1352 |
| Example 2-8 | 30 | / | / | 17.5 | 35 | 0.5 | 66.9 | 61.4 | 63.2 | 6.17 | 1152 |
| Example 2-9 | 30 | / | / | 10 | 65 | 0.154 | 67.0 | 62.6 | 65.4 | 6.14 | 1235 |
| Example 2-10 | 30 | / | / | 60 | 65 | 0.923 | 66.7 | 62.3 | 63.7 | 6.15 | 1241 |
| Example 2-11 | 30 | 2.5 | 75 | 17.5 | 35 | 0.5 | 62.8 | 57.7 | 60.7 | 5.78 | 1443 |

| | | | | | | | | | | | |
|---|---|---|---|---|---|---|---|---|---|---|---|
| Note: "/" in Table 2 indicates no corresponding parameter. | | | | | | | | | | | |

The inclusion of a polynitrile compound in the electrolyte solution and the mass percentage W₃% of the polynitrile compound typically affect the kinetic performance and high-temperature float charging performance of the lithium-ion battery. From Examples 1-1, 2-1 to 2-7, and 2-11, it can be seen that when the electrolyte solution includes a polynitrile compound and the mass percentage W₃% of the polynitrile compound is controlled within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₃×H₁ typically affects the kinetic performance and high-temperature float charging performance of the lithium-ion battery. From Examples 1-1, 2-1 to 2-7, and 2-11, it can be seen that when the value of W₃×H₁ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The inclusion of a propionate compound in the electrolyte solution and the mass percentage W₄% of the propionate compound typically affect the kinetic performance and high-temperature float charging performance of the lithium-ion battery. From Examples 1-1 and 2-8 to 2-10, it can be seen that when the electrolyte solution includes a propionate compound and the mass percentage W₄% of the propionate compound is controlled within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The value of W₂/W₄ typically affects the kinetic performance and high-temperature float charging performance of the lithium-ion battery. From Examples 1-1 and 2-8 to 2-10, it can be seen that when the value of W₂/W₄ is within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

**Table 3**

| | Dᵥ50 of first negative electrode active material (µm) | Dᵥ90 of first negative electrode active material (µm) | Dᵥ50 of second negative electrode active material (µm) | Dᵥ90 of second negative electrode active material (µm) | First negative electrode active material | Second negative electrode active material | R₁ (mQ) | R₂ (mQ) | R₃ (mQ) | K (×10⁻³ mQ/cycle) | D (h) |
|---|---|---|---|---|---|---|---|---|---|---|---|
| Example 1-1 | 13 | 23 | 11 | 22 | Artificial graphite | Artificial graphite | 65.8 | 60.3 | 61.7 | 6.14 | 1248 |
| Example 3-1 | 12 | 20.5 | 11 | 22 | Artificial graphite | Artificial graphite | 66.4 | 61.5 | 62.4 | 6.17 | 1152 |
| Example 3-2 | 14.9 | 25.9 | 11 | 22 | Artificial graphite | Artificial graphite | 66.2 | 61.8 | 62.9 | 6.15 | 1147 |
| Example 3-3 | 10 | 18.5 | 11 | 22 | Artificial graphite | Artificial graphite | 67.0 | 63.2 | 66.2 | 6.23 | 1047 |
| Example 3-4 | 17 | 27.0 | 11 | 22 | Artificial graphite | Artificial graphite | 67.4 | 63.4 | 66.8 | 6.24 | 1053 |
| Example 3-5 | 13 | 23 | 10 | 19.4 | Artificial graphite | Artificial graphite | 66.4 | 62.5 | 63.4 | 6.16 | 1146 |
| Example 3-6 | 13 | 23 | 11.5 | 24.8 | Artificial graphite | Artificial graphite | 66.3 | 60.5 | 62.4 | 6.15 | 1151 |
| Example 3-7 | 13 | 23 | 14 | 26.5 | Artificial graphite | Artificial graphite | 66.8 | 62.2 | 64.6 | 6.25 | 1057 |
| Example 3-8 | 13 | 23 | 11 | 22 | Natural graphite | Natural graphite | 65.5 | 60.6 | 62.0 | 6.16 | 1237 |

The Dᵥ50 and Dᵥ90 of the first negative electrode active material typically affect the kinetic performance and high-temperature float charging performance of the lithium-ion battery. From Examples 1-1 and 3-1 to 3-4, it can be seen that when the Dᵥ50 and Dᵥ90 of the first negative electrode active material are within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The Dᵥ50 and Dᵥ90 of the second negative electrode active material typically affect the kinetic performance and high-temperature float charging performance of the lithium-ion battery. From Examples 1-1 and 3-5 to 3-7, it can be seen that when the Dᵥ50 and Dᵥ90 of the second negative electrode active material are within the range of this application, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The type of the first negative electrode active material typically affects the kinetic performance and high-temperature float charging performance of the lithium-ion battery. From Examples 1-1 and 3-8, it can be seen that when the first negative electrode active material within the range of this application is selected, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

The type of the second negative electrode active material typically affects the kinetic performance and high-temperature float charging performance of the lithium-ion battery. From Examples 1-1 and 3-8, it can be seen that when the second negative electrode active material within the range of this application is selected, the lithium-ion battery has smaller R₁, R₂, R₃, and K values, indicating smaller initial impedance and impedance growth during cycling, as well as a larger D value, indicating good kinetic performance and high-temperature float charging performance of the lithium-ion battery.

It should be noted that in this document, relational terms such as first and second are used solely to distinguish one entity or operation from another entity or operation without necessarily requiring or implying any actual such relationship or order between such entities or operations. Moreover, the terms "include", "comprise", or any other variation thereof are intended to cover a non-exclusive inclusion, such that a process, method, article, or apparatus that includes a series of elements not only includes those elements, but also includes other elements which are not expressly listed, or further includes elements inherent to such process, method, article, or apparatus.

Each embodiment in this specification is described in a related manner. For a part that is the same or similar between different embodiments, reference may be made between the embodiments. Each embodiment focuses on the differences from other embodiments.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. A secondary battery, comprising a negative electrode plate and an electrolyte solution, wherein the negative electrode plate comprises a negative electrode current collector and a negative electrode material layer disposed on at least one surface of the negative electrode current collector, the negative electrode material layer comprising a first negative electrode material layer and a second negative electrode material layer that are stacked, wherein the second negative electrode material layer is located between the first negative electrode material layer and the negative electrode current collector, a thickness of the first negative electrode material layer is H₁ µm, and a thickness of the second negative electrode material layer is H₂ µm, wherein 20≤H₁≤40, and 60≤H₂≤90;
the first negative electrode material layer comprises a first negative electrode active material, the second negative electrode material layer comprises a second negative electrode active material, and Dᵥ50 of the first negative electrode active material is greater than Dᵥ50 of the second negative electrode active material; and
the electrolyte solution comprises lithium difluorophosphate and a propionate compound, wherein the propionate compound comprises propyl propionate; and based on a mass of the electrolyte solution, a mass percentage of the lithium difluorophosphate is W₁%, and a mass percentage of the propyl propionate is W₂%, wherein 0.1≤W₁≤1, 10≤W₂≤60, and 4≤W₁×H₁≤35.

2. The secondary battery according to claim 1, wherein 2≤H₂/H₁≤4.5.

3. The secondary battery according to claim 1, wherein 0.005≤W₁/H₁≤0.05.

4. The secondary battery according to claim 1, wherein 250≤W₂×H₁≤2400.

5. The secondary battery according to any one of claims 1 to 4, wherein the electrolyte solution comprises a polynitrile compound, wherein based on the mass of the electrolyte solution, a mass percentage of the polynitrile compound is W₃%, wherein 0.1≤W₃≤5; and
the polynitrile compound comprises at least one of succinonitrile, glutaronitrile, adiponitrile, pimelonitrile, suberonitrile, methylglutaronitrile, 1,3,5-pentanetricarbonitrile, 1,2,3-propanetricarbonitrile, 1,3,6-hexanetricarbonitrile, or 1,2,3-tris(2-cyanoethoxy)propane.

6. The secondary battery according to claim 5, wherein 50≤W₃×H≤200.

7. The secondary battery according to any one of claims 1 to 4, wherein based on the mass of the electrolyte solution, a mass percentage of the propionate compound is W₄%, wherein 10≤W₄≤65, and 0.154≤W₂/W₄≤1.

8. The secondary battery according to claim 7, wherein the propionate compound further comprises at least one of methyl propionate, ethyl propionate, butyl acrylate, or butyl propionate.

9. The secondary battery according to any one of claims 1 to 4, wherein the Dᵥ50 of the first negative electrode active material is 12 µm to 14.9 µm, and Dᵥ90 of the first negative electrode active material is 20.5 µm to 25.9 µm.

10. The secondary battery according to any one of claims 1 to 4, wherein the Dᵥ50 of the second negative electrode active material is 10 µm to 11.5 µm, and Dᵥ90 of the second negative electrode active material is 19.4 µm to 24.8 µm.

11. The secondary battery according to any one of claims 1 to 4, wherein the first negative electrode active material and the second negative electrode active material each independently comprise at least one of natural graphite, artificial graphite, soft carbon, hard carbon, meso-carbon microbead, silicon-carbon compound, silicon oxide compound, or lithium titanate.

12. An electronic apparatus, comprising the secondary battery according to any one of claims 1 to 11.
